# EUROPÄISCHE PATENTSCHRIFT

(11) **EP 0 628 465 B1**
(45) Veröffentlichungstag und Bekanntmachung des Hinweises auf die Patenterteilung: **29.04.1998**
(21) Anmeldenummer: 94108856.9
(22) Anmeldetag: 07.06.1994
(51) Int. Cl.: B62B 13/12

(54) **Sportgerät**
Article of sport
Article de sport

(30) Priorität: 08.06.1993 DE 4319090
(43) Veröffentlichungstag der Anmeldung: 14.12.1994
(73) Patentinhaber: Gottschalk, Werner, D-82069 Hohenschäftlarn (DE); Gottschalk, Christoph, D-82069 Hohenschäftlarn (DE)
(72) Erfinder: Gottschalk, Werner, D-82069 Hohenschäftlarn (DE); Gottschalk, Christoph, D-82069 Hohenschäftlarn (DE)

(56) Entgegenhaltungen:
- EP-A- 0 005 485
- DE-A- 238 312

## Beschreibung

Die Erfindung betrifft ein Sportgerät nach dem Oberbegriff des Anspruchs 1. Das erfindungsgemäße Sportgerät ist in erster Linie als Wintersportgerät zum Einsatz auf Ski- oder Rodelpisten, also auf Schneepisten vorgesehen, es kann jedoch auch auf Sand- oder Grashängen und -pisten, auf Kunststoffpisten oder dergleichen gefahren werden oder auch als Wassersportgerät eingesetzt werden.

Ein gattungsgemäßes Sportgerät ist aus der DE-PS 37 01 252 C2 bekannt. Bei dem dort beschriebenen Schlitten sind zwei parallel angeordnete Kufen an ihren vorderen Enden über eine Strebe und im hinteren Bereich über ein muldenförmiges Sitzelement verbunden. Die Verbindung der Strebe mit den Kufen sowie des Sitzelements mit den Kufen erfolgt jeweils über Gelenke, deren Drehachsen in Schlittenlängsrichtung geneigt verlaufen und zwar derart, daß die Drehachsen in Fahrtrichtung ansteigen. Weiterhin ist ein Lenkseil vorgesehen, dessen Enden jeweils in den Verbindungsbereichen zwischen der Strebe und den Kufenspitzen befestigt sind. Bei dem beschriebenen Schlitten wird durch Fußdruck auf das skiähnlich aufgebogene Ende der kurvenäußeren Kufe und Zug am Lenkseil der kurveninneren Kufe eine gleichsinnige Verkantung bei gleichzeitiger gegensinniger Längsverschiebung der Kufen bewirkt.

In der EP-PS 0 005 485 B1 ist ebenfalls ein Schlitten mit verkantbaren Kufen beschrieben. Bei dieser bekannten Ausführung sind zwei parallele Kufen über zwei Querstreben miteinander verbunden und die Querstreben sind ihrerseits über eine Sitzplatte miteinander verbunden. Die Anbringung der Querstreben an den Kufen erfolgt über vier Drehgelenke, die in Schlittenlängsrichtung geneigte und dabei in Fahrtrichtung ansteigende Drehachsen aufweisen, die zueinander parallel sind. Weiterhin sind zwischen der Sitzplatte und den beiden Querstreben gelenkige Verbindungen vorgesehen. Bei der Steuerung des Schlittens tritt gleichzeitig eine gegensinnige Längsverschiebung der Kufen, eine gleichsinnige Verkantung der Kufen sowie eine Verkippung der Sitzplatte auf. Durch ihre gelenkige Aufhängung wird die Sitzplatte in die Schlittensteuerung miteinbezogen.

Weiterhin ist aus der DE-PS 23 83 12 ein Schlitten bekannt, der durch Schrägstellen der Kufen lenkbar ist. Bei dem dortigen Schlitten sind unterhalb einer Sitzfläche vier Vertikalsäulen angeordnet, in denen vier Stangen gleitbar aufgenommen sind, die paarweise jeweils starr mit einer Kufe verbunden sind. Die Stangen sind als Zahnstangen ausgeführt, die mit Ritzeln zusammenwirken, die mittels zweier Handhebel verdreht werden können. Jede der beiden Kufen kann somit durch Bedienung der Handhebel separat aus den Vertikalsäulen ausgefahren werden. Durch ein unterschiedliches Ausfahren der Kufen ergibt sich dann eine Schrägstellung des Schlittens mit einer entsprechenden gleichsinnigen Einkantung der Kufen in die Aufstandsfläche.

In der DE-GM 77 31 120 ist ein Skirodel beschrieben, der aus zwei Skiern und einer Tragekonstruktion mit einem Leinensitz besteht. Jeder Ski ist dabei an zwei im Abstand hintereinander gelegenen Punkten um horizontale Achsen schwenkbar an zwei Tragrohren angelenkt, die in zugehörigen Führungsrohren verschiebbar sind. Die paarweise gegenüberliegenden Tragrohre der beiden Skier sind jeweils über ein Drahtseil miteinander verbunden, das an Kopfplatten der Tragrohre befestigt ist und um waagrecht verlaufende Rahmenrohre herumgelenkt wird. Beim Hochdrücken des einen Tragrohrs im Führungsrohr wird durch das verbindende Drahtseil das gegenüberliegende Tragrohr automatisch nach unten gezogen. Somit kann sich der gesamte Skirodel zur Seite neigen, um mit einer Parallelverkantung an einen Hang zu fahren.

Die der Erfindung zugrundeliegende Aufgabe besteht darin, ein Sportgerät mit neuartigen Fahr- und Steuereigenschaften zu schaffen.

Diese Aufgabe wird durch ein Sportgerät mit den Merkmalen des Anspruchs 1 gelöst.

Vorteilhafte Ausgestaltungen der Erfindung sind in den Unteransprüchen angegeben.

Durch das erfindungsgemäße Konzept, Kufen über Gelenke mit schrägen Schwenkachsen an einem Ausgleichselement aufzuhängen, das seinerseits durch ein en rohrförmigen Steuerbügel durchschiebbar ist, wird ein neuartiges Sportgerät mit bisher unbekannten fahrdynamischen Eigenschaften geschaffen, das auf neuartige Weise gesteuert wird. Durch die Kombination der Verschwenkmöglichkeit der Kufen relativ zum Ausgleichselement und der Verschiebemöglichkeit der Kufen gegeneinander mittels des Ausgleichselements ergibt sich eine Vielzahl möglicher Fahrstellungen für das Sportgerät.

Das erfindungsgemäße Konzept läßt sich in unterschiedliche Ausführungsformen, wie sie später beispielhaft beschrieben werden, umsetzen, von denen jede Ausführungsform wiederum ein spezifisches Fahrverhalten aufweist und dem Fahrer dementsprechend ein besonderes Fahrgefühl vermittelt. Beispielsweise kann die Erfindung in Form eines Sportgeräts mit zwei Kufen und einer einzigen Verbindungseinrichtung oder in Form eines Sportgeräts mit zwei Kufen und zwei Verbindungseinrichtungen realisiert werden.

Zweckmäßigerweise wird der Neigungswinkel der Schwenkachse des Kufengelenks, d.h. der Winkel zwischen der Drehachse und der Aufstandsebene der Kufen, im Bereich von etwa 20° bis 70° gewählt (unter der Aufstandsebene wird dabei eine ideale Bezugsebene verstanden, auf der das Sportgerät mit seinen Kufen aufliegt). Die Wahl des Neigungswinkels der Schwenkachse wirkt sich entsprechend auf das Steuer- und Fahrverhalten des Sportgeräts aus. Bei kleinen Neigungswinkeln überwiegt bei der Veschwenkung der Kufen der Rollbewegungsanteil um die Kufenlängsachse, d.h. die Verkantung der Kufen, während bei großen Neigungswinkeln der Drehbewegungsanteil um eine Achse vertikal zur Aufstandsebene überwiegt. Um beide der genannten Roll- und Drehbewegungsanteile beim Verschwenken der Kufen in ausgeprägter Form zu erhalten, wird ein Neigungswinkel im Bereich von etwa 30° bis 60° bevorzugt, wobei die konkrete Winkelauswahl entsprechend der gewünschten Fahrcharakteristik erfolgt. In einer besonderen Ausführungsform beträgt der Neigungswinkel 45°, so daß Roll- und Drehbewegung der Kufen in ausgewogener Weise verknüpft sind.

Die geneigten Schwenkachsen der Kufengelenke können dabei genau in der senkrecht zur Aufstandsebene der Kufen und parallel zur Längsrichtung des Sportgeräts verlaufenden Ebene liegen, sie können aber auch aus dieser Ebene herausgedreht angeordnet sein. Beispielsweise können die Schwenkachsen gegenüber der genannten Ebene jeweils zu den Kufenaußenseiten oder jeweils zu den Kufeninnenseiten hin herausgedreht angeordnet sein. Für den Fall, daß die der Aufstandsebene abgewandten Enden der Schwenkachsen jeweils zur Kufenaußenseite hin gedreht angeordnet werden, läßt sich für die Kufen als Neutralstellung eine V-förmige Stellung, bei der die Kufen in Fahrtrichtung zusammenlaufen, realisieren, während im umgekehrten Fall eine V-förmige Neutralstellung realisiert werden kann, bei der die Kufen in Fahrtrichtung auseinanderlaufen. Zusätzlich kann auch eine Verkantung der Kufen bezüglich der Aufstandsebene für eine Neutralstellung vorgesehen werden.

In bevorzugten Ausgestaltungen ist der rohrförmige Steuerbügel des Verbindungselements U-förmig mit zwei parallelen geraden Schenkeln oder V-förmig mit zwei geraden Schenkeln und einem bogenförmigen Abschnitt zwischen den beiden Schenkeln ausgebildet. Bei der U-förmigen Ausführung des Steuerbügels verlaufen die aus dem Steuerbügel herausragenden Abschnitte des Ausgleichselements parallel zueinander. Mit der V-förmigen Ausführung läßt sich gegenüber einem U-förmigen Rohrbügel gleicher Bauhöhe eine breitere Aufstandsbasis für die Kufen, d.h. ein größerer Kufenabstand realisieren, wobei die problemlose Durchschiebbarkeit des Ausgleichselements durch den bogenförmigen Abschnitt des Steuerbügels erhalten bleibt.

Für das Ausgleichselement besteht eine zweckmäßige Gestaltung darin, zwei gerade Gleitstücke über ein biegsames Verbindungsstück miteinander zu verbinden. Bei einer weiteren Ausgestaltung des Ausgleichselements sind zwei gerade Gleitstücke über ein Dämpfungs- und/oder Federelement miteinander verbunden. Vorzugsweise wird dabei als Federelement eine Zug- oder Druckfeder verwendet. Bei der Wahl eines biegsamen, jedoch nicht dämpfenden oder federnden Verbindungsstücks zwischen den Gleitstücken wird natürlich eine entsprechend andere Fahrcharakteristik des Sportgeräts erzielt als dies bei Integration eines Dämpfungs- und/oder Federelements im Ausgleichselement der Fall ist. Vorzugsweise wird eine Druckfeder verwendet, die vergleichsweise hart ist, um eine gute Übertragung der Durchschiebebewegung beim Ausgleichselement sicherzustellen.

Die Kufengelenke bestehen in einer günstigen Ausgestaltung jeweils aus zwei auf planen Auflageflächen aufeinanderliegenden Gelenkhälften, wobei die Auflageflächen senkrecht zur geneigten Schwenkachse des Kufengelenks verlaufen und gegeneinander um diese Achse verdrehbar sind. Um die Reibungskraft zwischen den aufeinanderliegenden Auflageflächen einstellen zu können, ist es zweckmäßig, eine Einrichtung zur Justierung der im unbelasteten Zustand des Kufengelenks wirksamen Auflagekraft vorzusehen. Weiterhin ist es günstig, an den Kufengelenken zum Festlegen der neutralen Fahrstellung, d.h. für den Geradeauslauf, eine Rasteinrichtung vorzusehen, damit für diese Fahrstellung eine erhöhte Fahrstabilität gegeben ist. Diese Rasteinrichtung kann auch weitere Rastpositionen für andere vorbestimmte Fahrstellungen aufweisen. Beispielsweise kann auch als Startposition eine Pflugstellung vorgesehen sein, die von den Kufen automatisch durch die Wirkung einer Feder eingenommen wird, so daß z.B. das Sportgerät beim Abstellen nicht so leicht wegrutscht, und die vom Fahrer gegen die Federkraft, z.B. in eine Geradeausstellung, geändert werden kann. Ferner ist es zweckmäßig, am Kufengelenk Anschläge vorzusehen, um die maximale Verschwenkung einer Kufe aus der Neutralstellung zu begrenzen. Dabei kann der Verschwenkbereich einer Kufe nach innen, zur Sportgerätmitte, und nach außen unterschiedlich begrenzt sein.

Für die Kufen wird eine skiartige Ausgestaltung bevorzugt, wobei beim Einsatz als Wintersportgerät der Aufbau der Kufen dem Aufbau herkömmlicher Skier entsprechen kann. Bei Verwendung des Sportgeräts auf anderem Untergrund als Schnee müssen die Kufen in ihrer Form und ihrem Materialaufbau an die entsprechenden Medien, wie z.B. Sand, angepaßt werden. Bei einer Verwendung als Wassersportgerät werden die Kufen ähnlich wie Wasserskier ausgebildet.

Bei einer vorteilhaften Ausgestaltung der Erfindung ist auf zwei Kufen jeweils eine anatomisch angepaßte Formschale zur Einfassung des Knie- , Unterschenkel- und Fußbereichs jeweils eines Beins des Sportgerätfahrers vorgesehen. Die Formschalen übertragen Steuerbewegungen der Beine des Fahrers auf die Kufen. Dabei ist es zweckmäßig, die Formschale mit einem dämpfenden Polstermaterial, wie z.B. Schaumstoff, auszukleiden. Bei einer Ausgestaltung der Erfindung sind die Kufengelenke und die Formschalen direkt an den Kufen angeordnet. Bei einer anderen Ausgestaltung ist jeweils parallel und im Abstand zur Kufe eine mit dieser verbundene Platte zur Anbringung der Formschalen und der Kufengelenke vorgesehen. Die Verbindung zwischen Platte und Kufe kann dabei jeweils durch Stoßdämpfer erfolgen, um Stöße besser vom Fahrer fernzuhalten. Anstelle jeweils einer durchgehenden Kufe können dann auch mehrere Kufen hintereinander an jeder Platte befestigt sein.

Die vorangehend erläuterten Ausgestaltungen der Erfindung können in Verbindung mit einer ersten Ausführungsform des Sportgeräts realisiert werden, bei der das Sportgerät auf zwei Kufen basiert, die über eine einzige Verbindungseinrichtung im vorderen Bereich der Kufen miteinander verbunden sind.

Ferner können die beschriebenen Ausgestaltungen aber auch Anwendung finden im Rahmen einer zweiten Ausführungsform des Sportgeräts, die zwei Verbindungseinrichtungen für die Kufen umfaßt, die im Abstand hintereinander angeordnet sind und zwischen denen ein Sitz angebracht ist. Bei dieser Ausführungsform ist der Sitz in seinen Endbereichen jeweils drehgelenkig mit Querstreben an den Steuerbügeln der Verbindungseinrichtungen verbunden und zwar derart, daß die Steuerbügel relativ zum Sitz um eine etwa senkrecht zur Aufstandsebene verlaufende Hochachse des Sportgeräts drehbar sind.

Die oben beschriebenen Ausgestaltungen der Erfindung können auch bei einer dritten Ausführungsform des Sportgeräts realisiert werden, die auf zwei Kufen mit einer einzigen Verbindungseinrichtung basiert, wobei an einer Querstrebe des Steuerbügels ein Sitzelement um eine etwa senkrecht zur Aufstandsebene verlaufende Hochachse des Sportgeräts drehbar angeschlossen ist und sich der Sitz von der Verbindungseinrichtung entgegen der Fahrtrichtung im Bereich zwischen den Kufen erstreckt und über einen Stützholm auf einer Hilfskufe zwischen den Kufen abgestützt ist. Es ist günstig, den Sitz und den Stützholm als einstückiges, an die Sitzposition des Fahrers angepaßtes Formteil zu gestalten.

Bei der zweiten und dritten Ausführungsform des Sportgeräts kann anstelle einer Formschale zur Einfassung des Knie-Unterschenkel- und Fußbereichs des Beins des Sportgerätfahrers, wie sie bereits beschrieben wurde, jeweils eine anatomisch angepaßte Halteeinrichtung für die Füße des Sportgerätfahrers vorgesehen sein. Bei der Ausführung mit zwei Formschalen nimmt der Sportgerätfahrer eine kniende Position ein, bei der es sich gegebenenfalls auf dem Sitz abstützt. Dagegen sitzt der Sportgerätfahrer bei der Ausführung mit zwei Fuß-Halteeinrichtungen auf dem Sitz und die Steuerbewegungen werden von den Füßen über die Halteeinrichtungen auf die Kufen übertragen.

Weiterhin ist es vorteilhaft, für die Ausführungsformen des Sportgeräts mit Formschalen am fußseitigen Bereich jeder Formschale eine mit dem Fußballen betätigbare Fußbremse vorzusehen. Durch Betätigung nur jeweils einer der beiden Fußballenbremsen, und zwar jeweils der Bremse der kurveninneren Kufe, kann die Kurvensteuerung des Sportgeräts unterstützt werden. Bei gleichzeitiger Betätigung beider Fußballenbremsen wird dann das Sportgerät gebremst. Für die Kufen kann aber auch jeweils ein Bremselement vorgesehen sein, das über z.B. am Steuerelement angebrachte Handbremsgriffe bedient wird.

Es ist außerdem günstig, in den Formschalen bzw. Fuß-Halteeinrichtungen skistopperartige Bremselemente vorzusehen, die unwirksam sind, solange sich das Bein bzw. der Fuß des Fahrers in der Formschale bzw. der Fuß-Halteeinrichtung befindet. Ansonsten wird die Brems- bzw. Haltewirkung analog zum Skistopper durch einen Federmechanismus ausgelöst, damit das Sportgerät selbständig zum Stehen kommt, falls der Fahrer stürzt, oder damit das Sportgerät an einem Hang sicher abgestellt werden kann, wenn das Sportgerät nicht benützt wird.

Eine weitere günstige Ausgestaltung zur Unterstützung der Kurvensteuerung bei den verschiedenen Ausführungsformen des Sportgeräts besteht darin, im Bereich der Kufengelenke der vorderen und/oder hinteren Verbindungseinrichtung zu jedem der beiden Kufengelenke kufenaußenseitig ein Bremselement vorzusehen. Jeweils ausgelöst durch ein Verschwenken der Kufengelenke aus einer neutralen Stellung wird das jeweils kurveninnere Bremselement selbsttätig wirksam, wahrend das kurvenäußere Bremselement unwirksam bleibt. Die Steuerung der Bremselemente erfolgt in Abhängigkeit von Richtung und Ausmaß der Gelenkverschwenkung im Kufengelenk.

Um eine effektivere Steuerung zu erhalten, kann jeweils an den Außenseiten der Schenkelenden des rohrförmigen Steuerbügels nach unten ragend ein Bremsdorn angebracht sein. Beim nahezu vollständigen Neigen des Steuerbügels in Richtung talwärts, was gleichzeitig ein Flachstellen der Kufen bedeutet, wird der Bremsdorn in den Untergrund der talseitigen Kufen gedrückt, die somit jeweils zur kurveninneren Kufe wird. Es wird also durch die Wirkung des Bremsdorns eine entsprechende Kurve eingeleitet. Eine derartige Steuerungsmöglichkeit ist speziell auf dem Aufbau des erfindungsgemäßen Sportgeräts abgestimmt, da sie direkt mit der erfindungsgemäßen Verbindungseinrichtung zusammenwirkt.

Nachfolgend werden bevorzugte Ausführungsbeispiele des erfindungsgemäßen Sportgeräts mit Bezug auf die beigefügten Zeichnungen näher erläutert.

Es zeigen:
- Fig. 1: eine erste Ausführung einer Verbindungseinrichtung mit Kufengelenken in einer ersten, teilweise geschnittenen Seitenansicht (Blickrichtung entspricht Fahrtrichtung);
- Fig. 2: die Verbindungseinrichtung mit Kufengelenken gemäß Fig. 1 in einer zweiten, teilweise geschnittenen Seitenansicht;
- Fig. 3: die Verbindungseinrichtung mit Kufengelenken in der Ausführung und Ansicht entsprechend Fig. 1, jedoch mit einer aus der Neutralstellung gemäß Fig. 1 ausgelenkten Position des Ausgleichselements;
- Fig. 4: eine zweite Ausführung einer Verbindungseinrichtung mit Kufengelenken in einer teilweise geschnittenen Seitenansicht (Blickrichtung entspricht Fahrtrichtung);
- Fig. 5: eine dritte Ausführung einer Verbindungseinrichtung mit Kufengelenken in einer Seitenansicht (Blickrichtung entspricht Fahrtrichtung);
- Fig. 6: eine Ausführung eines Kufengelenks in perspektivischer Explosionsdarstellung;
- Fig. 7: das Hufengelenk gemäß Fig. 6 in einer Seitenansicht;
- Fig. 8: eine Schnittansicht I-I des Kufengelenks gemäß Fig. 7;
- Fig. 9: eine erste Ausführungsform des Sportgeräts in perspektivischer Darstellung;
- Fig. 10: das Sportgerät gemäß Fig. 9 in der Seitenansicht;
- Fig. 11: das Sportgerät gemäß Fig. 9, jedoch zusätzlich mit Platten und Stoßdämpfern in einer Seitenansicht;
- Fig. 12: das Sportgerät gemäß Fig. 11 in der Draufsicht;
- Fig. 13a: das Sportgerät gemäß Fig. 9 ohne Formschalen in einer Geradeaus-Fahrstellung in der Draufsicht (oben) und in der Rückansicht mit Blick in Fahrtrichtung (unten);
- Fig. 13b: das Sportgerät gemäß Fig. 13a in einer Pflug-Fahrstellung in der Draufsicht (oben) und in der Rückansicht mit Blick in Fahrtrichtung (unten);
- Fig. 13c: das Sportgerät gemäß Fig. 13a in einer Fahrstellung mit einer ausgestellten und verkanteten Kufe in der Draufsicht (oben) und in der Rückansicht mit Blick in Fahrtrichtung (unten);
- Fig. 13d: das Sportgerät gemäß Fig. 13a in einer Fahrstellung mit gegensinnig längsverschobenen und gleichsinnig verkanteten Kufen in der Draufsicht (oben) und in der Rückansicht mit Blick in Fahrtrichtung (unten);
- Fig. 14: eine zweite Ausführungsform des Sportgeräts in perspektivischer Darstellung;
- Fig. 15: das Sportgerät gemäß Fig. 14, jedoch zusätzlich mit Plattenelementen, geteilten Kufen, Stoßdämpferelementen sowie einer Bremseinrichtung, in perspektivischer Darstellung;
- Fig. 16: eine dritte Ausführungsform des Sportgeräts in perspektivischer Darstellung;
- Fig. 17: das Sportgerät gemäß Fig. 16, jedoch mit Fuß-Halteeinrichtungen anstelle von Formschalen, in der Seitenansicht;
- Fig. 18: das Sportgerät gemäß Fig. 9 mit Fahrer in perspektivischer Darstellung.

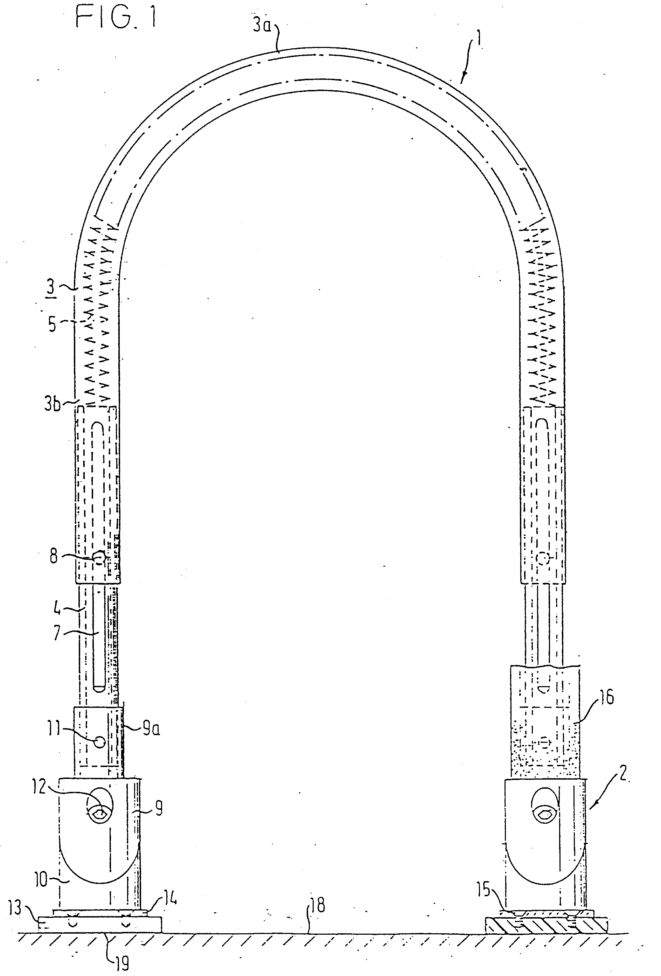

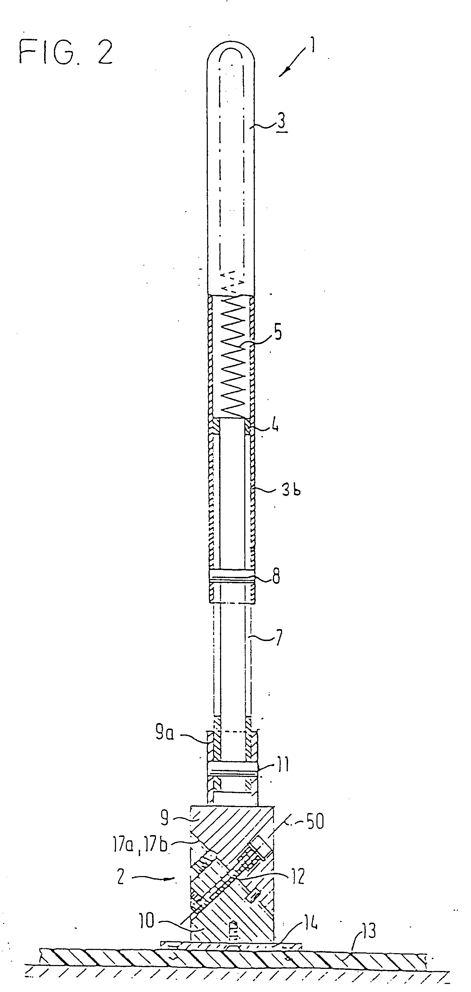

Die Fig. 1 und 2 zeigen eine erste Ausführung einer Verbindungseinrichtung 1 mit einem rohrförmigen Steuerbügel 3 und einem darin durchschiebbar aufgenommenen Ausgleichselement, das aus zwei geraden Gleitstücken 4 und einer diese verbindenden Druckfeder 5 besteht. Der Steuerbügel 3 ist mit einem Kreisrohrquerschnitt ausgebildet, bei dem zwei gerade, zueinander parallele Schenkel 3b über einen bogenförmigen Abschnitt 3a miteinander verbunden werden. Die beiden Gleitstücke 4 sind jeweils in einem geraden Schenkel 3b des Steuerbügels 3 verschiebbar geführt. Jedes Gleitstück 4 ist zylinderförmig ausgebildet und weist eine parallel zu seiner Längsachse verlaufende Gleitkulisse 7 in Form eines Längsschlitzes auf, der sich fast über die gesamte Länge des Gleitstücks erstreckt. Der Innendurchmesser des Steuerbügels 3 mit kreisförmigem Querschnitt ist passend zum Außendurchmesser des Gleitstücks 4 gewählt und an jedem Rohrende des Steuerbügels 3 ist quer zur Rohrlängsachse ein bolzenförmiger Anschlag 8 angebracht, dessen Durchmesser zur Breite der Gleitkulisse 7 paßt und der durch die Gleitkulisse hindurchgeführt ist. Die Druckfeder 5 ist eine Schraubenfeder und ist fest mit den Gleitstücken 4 verbunden. Der Durchmesser der Druckfeder 5 ist etwas kleiner als der Innendurchmesser des Steuerbügels 3 gewählt, so daß die Feder problemlos im Rohr hin und her gleiten kann.

Wie weiter aus den Fig. 1 und 2 ersichtlich ist, ist an jedem freien Ende des Ausgleichselements, d.h. an jedem freien Ende der Gleitstücke 4 ein Kufengelenk 2 angeordnet. Jedes Kufengelenk 2 besteht aus einer oberen Gelenkhälfte 9 und einer unteren Gelenkhälfte 10, die über einen Gelenkbolzen 12 miteinander verbunden sind, dessen Längsachse gleichzeitig die Schwenkachse 50 des Gelenks darstellt. Auf der oberen Gelenkhälfte 9 des Kufengelenks 2 ist eine Anschlußhülse 9a fest angeordnet. Die Anschlußhülse 9a nimmt jeweils das freie Ende des zugehörigen Gleitstücks 4 auf und das Gleitstück 4 ist mit der Anschlußhülse 9a über einen Verbindungsbolzen 11 fest verbunden.

Während die gelenkabgewandte Stirnfläche der oberen Gelenkhälfte 9 über die Anschlußhülse 9a mit dem einen Ende des Ausgleichselements verbunden ist, ist die gelenkabgewandte Stirnfläche der unteren Gelenkhälfte 10 fest mit einer Befestigungsplatte 14 verbunden. Die Befestigungsplatte 14 wiederum ist mittels Befestigungsschrauben 15 auf einer skiartigen Kufe 13 fixiert.

Der Steuerbügel 3 sowie die aus dem Steuerbügel herausragenden Abschnitte der Gleitstücke 4 und die Anschlußhülsen 9a sind durchgehend mit einer Schaumstoffhülle 16 ummantelt, die in den Figuren 1, 3 und 4 jeweils nur angedeutet ist. Diese Ummantelung ermöglicht ein bequemes Umgreifen des Steuerbügels 3 und schirmt die aus den Enden des Steuerbügels herausragenden Abschnitte des Ausgleichselements wegen einer möglichen Verletzungsgefahr ab. Die freie Verschiebbarkeit des Ausgleichselements relativ zum Steuerbügel 3 wird jedoch durch die Schaumstoffhülle 16 nicht behindert.

In den Fig. 1 und 2 ist die Verbindungseinrichtung 1 in einer neutralen Position gezeigt, bei der beide Gleitstücke 4 gleich weit aus dem Steuerbügel 3 herausragen. Weiterhin befinden sich auch die Kufengelenke 2 in einer neutralen Ausgangsstellung, bei der sich die ellipsenförmigen Auflageflächen 17a, 17b der oberen und unteren Gelenkhälften 9, 10 jedes Kufengelenks 2 vollkommen überdecken. Folglich ruht das Sportgerät derart auf einer Aufstandsebene 18, daß die Aufstandsflächen 19 der Kufen 13 parallel zur Aufstandsebene orientiert sind und beide Aufstandsflächen ganz aufliegen. Dabei sind die Aufstandsflächen 19 der Kufen 13 senkrecht zu den Längsachsen der Gleitstücke 4 bzw. den Längsachsen der geraden Schenkel 3b des Steuerbügels 3 ausgerichtet.

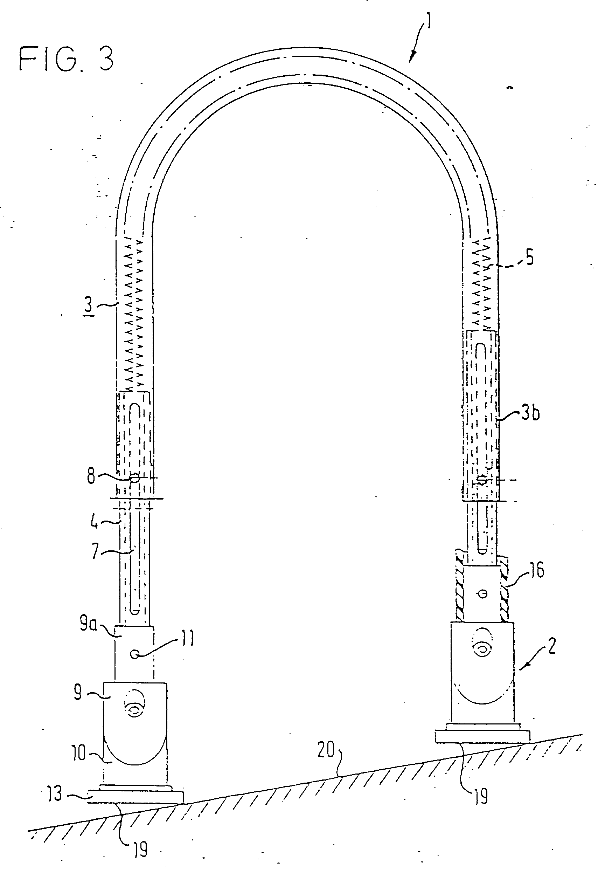

Fig. 3 zeigt eine Verschiebung der Gleitstücke 4 relativ zum Steuerbügel 3. Wie sich durch Vergleich mit Fig. 1 ergibt, ist das linke Gleitstück 4 aus dem Steuerbügel 3 herausgeschoben, d.h. in der Zeichnung nach unten, während das rechte Gleitstück 4 in den Steuerbügel 3 hineingeschoben, d.h. in der Zeichnung nach oben ausgelenkt ist. Die Gleitstücke 4 gleiten dabei jeweils in den geraden Schenkeln 3b des Steuerbügels 3, wobei sich die Gleitkulisse 7 relativ zum bolzenförmigen Anschlag 8, der fest im Schenkel 3b angeordnet ist, verschiebt. Eine Verschiebung des Gleitstücks ist jeweils maximal soweit möglich, bis eines der Enden der Gleitkulisse 7 am Anschlag 8 anliegt. Da die beiden Gleitstücke 4 über die Druckfeder 5 miteinander verbunden sind, bewirkt jeweils ein Herausschieben des einen Gleitstücks aus dem Steuerbügel 3 ein Hineinschieben des zweiten Gleitstücks um einen gleichen Betrag und umgekehrt. Die Druckfeder 5 ist dabei so gewählt, daß eine Übertragung der Verschiebebewegung eines Gleitstücks 4 auf das andere Gleitstück 4 gewährleistet ist, während einzelne Stöße in Richtung der Gleitstücklängsachse von der Feder aufgefangen werden.

In Fig. 3 ist eine Position des Sportgeräts dargestellt, bei der das linke Gleitstück 4 weiter aus dem Steuerbügel 3 hervorragt als das rechte Gleitstück 4. Daraus resultiert ein Höhenversatz der beiden Kufengelenke 2 und damit der beiden Kufen 13 in Richtung der Längsachse der geraden Schenkel 3b des Steuerbügels 3. Nachdem sich bei der dargestellten Position die beiden Kufengelenke 2 in ihrer Neutralstellung befinden, sind die beiden Kufen 13 parallel zueinander orientiert und die Aufstandsflächen 19 der Kufen liegen in zueinander parallelen Ebenen. Allein durch den Höhenversatz zwischen den Kufen, der durch eine Verschiebung des Ausgleichselements im Steuerbügel 3 erzeugt wird, wird nun erreicht, daß die Kufen 13 sich an die Neigung eines Hanges 20, z.B. einer Skipiste, anpassen, wobei ein Einkanten der Kufenaufstandsflächen 19 in die Ebene des Untergrunds erzielt wird. Auf diese Weise bleibt das Sportgerät in seiner Höhenerstreckung vertikal ausgerichtet und das Einkanten der Kufen am Hang, d.h. das Aufliegen der Kufen mit nur einer, jeweils bergseitigen Längskante, verhindert analog zum Einkanten bei Skiern ein Abrutschen des Sportgeräts. Durch die vertikale Ausrichtung des Sportgeräts am Hang bleibt auch der Körper des Fahrers vertikal ausgerichtet und eine ungünstige Hangabwärtsneigung des Körpers und des Sportgeräts mit der entsprechenden Sturzgefahr wird vermieden. Zudem wird eine verkrampfte Fahrerhaltung vermieden und die Steuerung des Sportgeräts erleichtert.

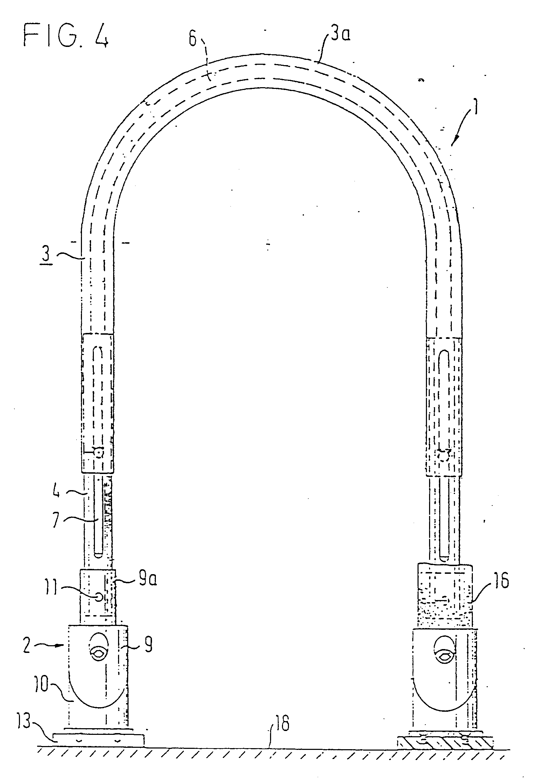

Eine zweite, in Fig. 4 dargestellte Ausführung der Verbindungseinrichtung 1 entspricht der ersten Ausführung gemäß Fig. 1, wobei jedoch die Druckfeder 5 durch ein biegsames Verbindungsstück 6 ersetzt ist, das beispielsweise aus Kunststoff besteht. Das Verbindungsstück muß die Übertragungskräfte in Richtung seiner Längsausdehnung übertragen können und soweit biegsam sein, daß es durch den bogenförmigen Abschnitt 3a des Steuerbügels 3 durchgeschoben werden kann.

Das Verbindungsstück 6 kann sowohl hohl, also schlauchartig, als auch massiv ausgeführt sein und es kann sowohl aus einem dämpfenden als auch aus einem nicht dämpfenden Material gefertigt sein. Ferner kann das Verbindungsstück auch aus einem Verbund verschiedender Materialien aufgebaut sein, wobei sowohl ein Verbund in Richtung des Querschnitts möglich ist als auch ein Verbund mehrerer in Längsrichtung aneinandergereihter Materialabschnitte, von denen z.B. einige als Dämpfungsabschnitte ausgelegt sein können. Das Verbindungsstück kann aber auch aus kettenförmig aneinandergereihten Gliedern gebildet sein, die durch eine gelenkige Verbindung der einzelnen Glieder den nötigen Biegeradius des Verbindungsstücks erlauben.

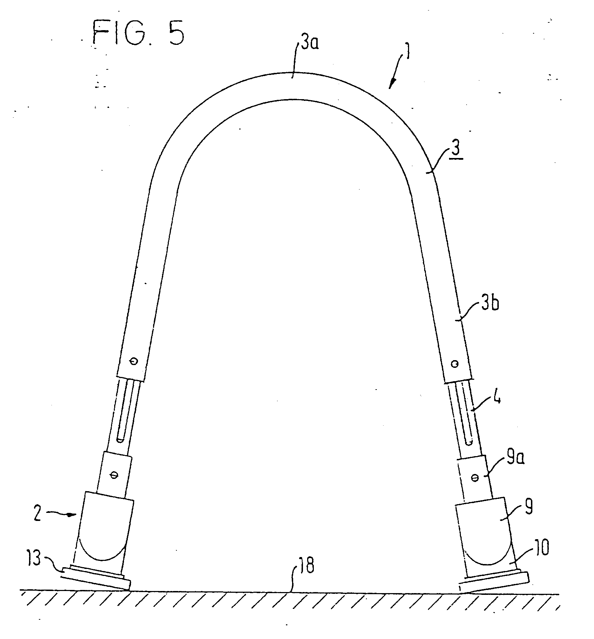

Eine dritte Ausführung der Verbindungseinrichtung 1 ist in Fig. 5 schematisch dargestellt. Im Gegensatz zu den vorher beschriebenen Ausführungen ist der Steuerbügel 3 V-förmig gestaltet, d.h. mit einem bogenförmigen Abschnitt 3a und mit in Richtung ihrer freien Enden auseinanderstrebenden geraden Schenkein 3b. Auf diese Weise wird eine breitere Aufstandsbasis für die Kufen 13 realisiert, wobei gleichzeitig bereits bei der Neutralstellung der Kufengelenke 2 eine Vorverkantung der zueinander parallelen Kufen 13 bezüglich der Aufstandsebene 18 erreicht wird, d.h., die Kufen 13 liegen nur mit ihren Innenkanten auf.

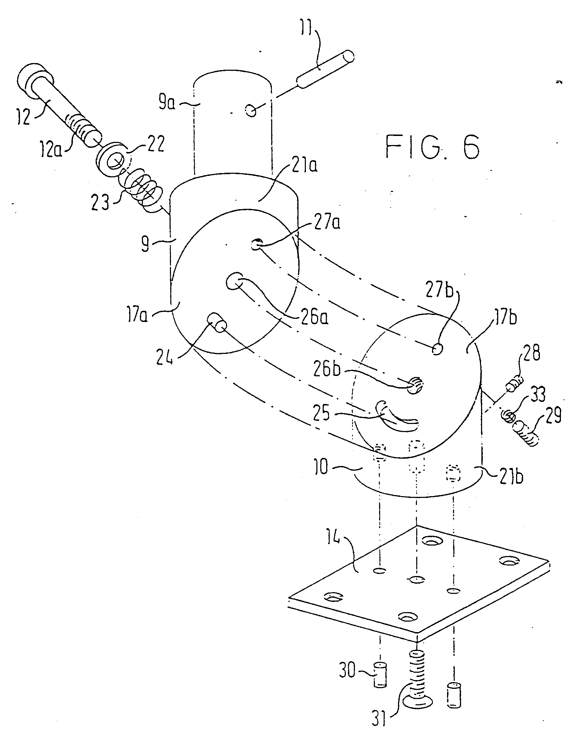

Eine Ausführung eines Kufengelenks 2, das als Schräggelenk mit geneigter Drehachse ausgebildet ist, ist in den Fig. 6, 7 und 8 dargestellt. Wie Fig. 6 verdeutlicht, sind eine obere Gelenkhälfte 9 und eine untere Gelenkhälfte 10 jeweils als Körper mit zylindrischen Mantelflächen 21a und 21b ausgeführt. Die beiden Gelenkhälften sind durch den die Schwenkachse 50 bildenden Gelenkbolzen 12 drehbar miteinander verbunden. Dabei ist der Gelenkbolzen 12 durch eine Durchgangsbohrung 26a in der oberen Gelenkhälfte 9 geführt und mit seinem Gewindeabschnitt 12a in eine Gewindebohrung 26b der unteren Gelenkhälfte 10 eingeschraubt. Durch eine Stiftschraube 28, die quer gegen den Gelenkbolzen 12 geschraubt wird, wird dieser verdrehfest gesichert. Die beiden Gelenkhälften 9 und 10 liegen mit planen Auflageflächen 17a und 17b aufeinander und die obere Gelenkhälfte ist auf der unteren Gelenkhälfte um die Achse des Gelenkbolzens 12 drehbar. Um die Auflageflächen 17a, 17b aneinander zu drücken und gleichzeitig die relative Verdrehbarkeit zu gewährleisten, wird die obere Gelenkhälfte 9 mittels einer Druckschraubenfeder 23, die sich über eine Unterlegscheibe 22 am Kopf des Gelenkbolzens 12 abstützt, mit der Auflagefläche 17a gegen die Auflagefläche 17b der unteren Gelenkhälfte 10 vorgespannt. Die Auflagekraft zwischen den aufeinanderliegenden Auflageflächen 17a, 17b läßt sich durch eine entsprechende Wahl der Druckschraubenfeder 23 einstellen.

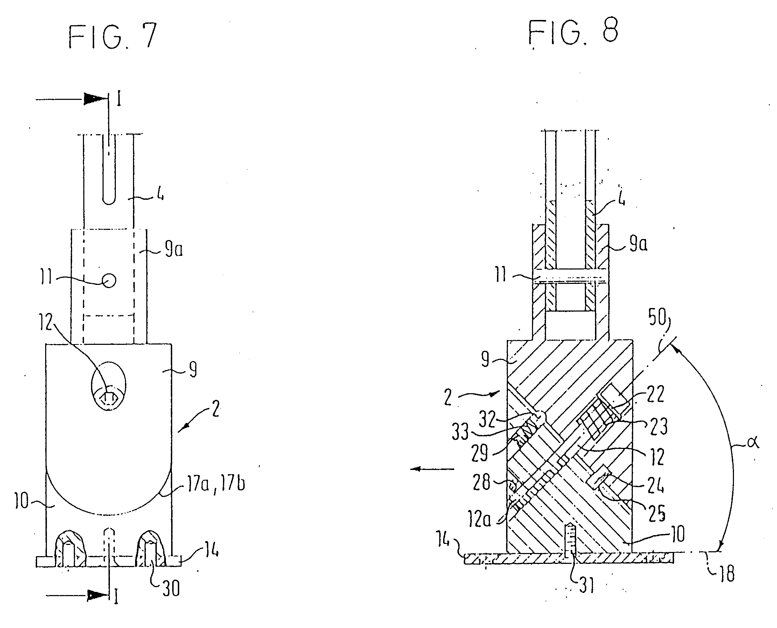

Aus Fig. 8 ist ersichtlich, daß die Schwenkachse 50 des Kufengelenks 2, die mit der Längsachse des Gelenkbolzens 12 übereinstimmt, einen Winkel α mit der Aufstandsebene 18 einschließt. In bezug auf die Fahrtrichtung, die in Fig. 8 durch einen Pfeil dargestellt ist, ist die Schwenkachse 50 des Kufengelenks 2 derart geneigt, daß sie in Fahrtrichtung abfällt. Dabei verläuft die Schwenkachse in einer Ebene parallel zur Zeichenebene, d.h. in einer Ebene senkrecht zur Aufstandsebene 18 und parallel zur Längsrichtung - entspricht der Richtung der Pfeilachse - des Sportgeräts. Die Auflageflächen 17a, 17b sind Planflächen und ihre Ebenen verlaufen senkrecht zur Schwenkachse 50. Da es sich bei den Gelenkhälften 9, 10 um zylindrische Grundkörper handelt, ergeben sich für die schrägen Auflageflächen 17a, 17b elliptische Flächen.

Wie die Fig. 6 und 8 verdeutlichen, ist in den Auflageflächen 17a, 17b eine Anschläge 24, 25 bildende Kulissenführung integriert, bei der ein Zapfen 24 in einer kreisbogenförmigen Führungsnut 25 gleitet. Durch Anschlagen des Zapfens 24 an den Enden der Führungsnut 25 wird die maximale Verdrehung der beiden Gelenkhälften 9, 10 zueinander begrenzt.

Weiterhin sind zusammengehörige Ausnehmungen 27a und 27b gezeigt, die Teil einer Rasteinrichtung sind, die der Festlegung der Neutralstellung des Kufengelenks dient, d.h. derjenigen Stellung, in der sich die Auflageflächen 17a und 17b völlig überdecken und durch die die Geradeaus-Fahrstellung der Kufen gegeben ist. Eine Kugel 32 stützt sich mittels einer Druckschraubenfeder 33 an einer Stiftschraube 29 ab, die in die Durchgangsbohrung 27b eingeschraubt ist. In der eingerasteten Position liegt die Kugel 32 in der passenden halbkugelförmigen Ausnehmung 27a und wird von der Druckschraubenfeder 33 in dieser Position gehalten. Beim Verschwenken des Gelenks aus der Neutralstellung wird die Kugel 32 gegen die Federkraft in die Bohrung 27b eingedrückt. Für bevorzugte Verschwenkstellungen des Kufengelenks können weitere Rastpositionen vorgesehen werden.

An der gelenkabgewandten Stirnfläche der unteren Gelenkhälfte 10 ist mittels Zentrierstiften 30 und einer Befestigungsschraube 31 die Befestigungsplatte 14 zur Montage des Kufengelenks auf eine Kufe oder eine Zwischenplatte angebracht. Die Befestigungsplatte 14 kann auch verdreht oder verkippt in bezug auf die untere Gelenkhälfte 10 angebracht sein, um auf diese Weise eine Pfeilung der Kufen und/oder eine Vorverkantung der Kufen in der Ausgangsstellung des Sportgeräts, d.h. mit den Kufengelenken in ihrer Neutralstellung, zu realisieren.

Die vorangehend erläuterte Verbindungseinrichtung 1 sowie die Kufengelenke 2 mit geneigter Schwenkachse können in ihrer konstruktiven Ausführung natürlich auch auf andere Weise realisiert werden. Selbstverständlich können beispielsweise bei der Verbindungseinrichtung 1 der Steuerbügel 3 und das Durchschiebeelement mit anderen Querschnitten als einem Kreisrohrquerschnitt ausgeführt werden. Es können beliebige, ineinander verschiebbare Profile gewählt werden, wobei sich bei nicht-kreisförmigen Profilen zusätzlich der Vorteil einer verdrehfesten Führung des Durchschiebeelements relativ zum Steuerbügel ergibt. Bei der Lösung mit kreisförmigem Querschnitt kann mittels einer zusätzlichen Nut/Federverbindung eine verdrehsichere Führung vorgesehen werden.

Ebenso kann auch das Kufengelenk 2 auf andere Weise als durch aufeinander gleitende, geneigt angeordnete plane Auflageflächen realisiert werden. Beispielsweise kann ein solches Schräggelenk auch auf einer Bolzenachse mit einer um diese drehbaren Hülse basieren, wobei die Bolzenachse geneigt ist.

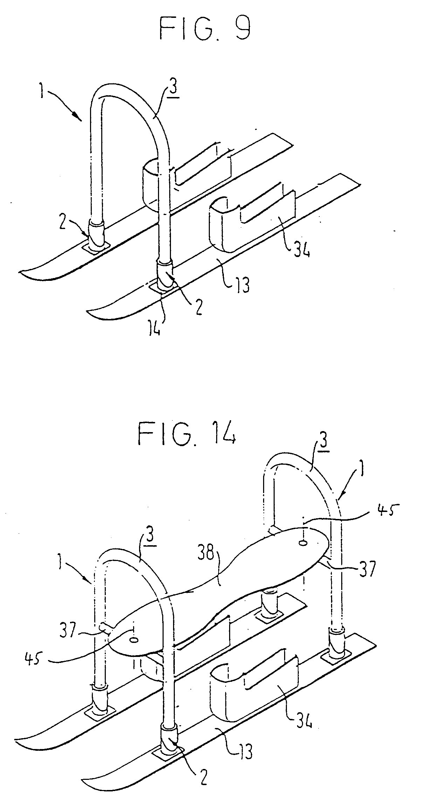

Nachfolgend werden nun mit Bezug auf die Figuren 9 bis 17 verschiedene Konfigurationen des Sportgeräts näher erläutert. Diese Konfigurationen basieren alle auf der vorangehend beschriebenen Kombination aus einer Verbindungseinrichtung mit einem durchschiebbaren Ausgleichselement und aus zwischen dem Ausgleichselement und den Kufen angeordneten Kufengelenken mit geneigter, in Fahrtrichtung abfallender Schwenkachse.

Bei einer ersten Ausführungsform des Sportgeräts, wie sie in Fig. 9 gezeigt ist, sind zwei skiartige Kufen 13 über eine einzige U-förmige Verbindungseinrichtung 1 im vorderen Bereich der Kufen miteinander verbunden. Die Verbindungseinrichtung 1 ist so ausgeführt, wie mit Bezug auf die Figuren 1 bis 4 beschrieben. Der Steuerbügel 3 ist mit einer Kunststoff- oder Schaumstoffummantelung versehen, damit er bequem mit den Händen gegriffen werden kann. Die Enden der Verbindungseinrichtung 1 sind jeweils über ein Kufengelenk 2 mittels einer Befestigungsplatte 14 mit den Kufen 13 verbunden. Die Kufengelenke 2 wurden bereits in Verbindung mit den Figuren 6 bis 8 in ihrer Ausführung näher erläutert. Die Kufen 13 sind an ihren Spitzen in der Art eines Skis nach oben gebogen und sind im Bereich hinter der Verbindungseinrichtung jeweils mit einer Formschale 34 versehen, in die der Fahrer hineinkniet und die entsprechend anatomisch angepaßt sind, um den Knie- , Unterschenkel- und Fußbereich des Fahrers zu umfassen. Die Formschalen 34 sind aus einem stabilen Kunststoff gefertigt, der mit einer Innenpolsterung versehen ist.

Fig. 18 zeigt die Position, die der Fahrer auf dem Sportgerät gemäß Fig. 9 einnimmt. Er kniet mit seinen Beinen in den Formschalen 34 auf den Kufen 13, so daß er mit seinen Beinen über die Formschalen Steuerbewegungen und -kräfte auf die Kufen übertragen kann. Mit seinen Händen hält sich der Fahrer am ummantelten Steuerbügel 3 fest und kann so über den Steuerbügel ebenfalls Steuerbewegungen und -kräfte auf das Sportgerät aufbringen. Durch die kniende Position des Fahrers wird der Körperschwerpunkt in bezug auf das Sportgerät sehr niedrig gehalten, was sich günstig auf die Fahrstabilität insbesondere in Kurven auswirkt.

Wie im Zusammenhang mit Fig. 3 beschrieben wurde, ermöglicht die Verbindungseinrichtung 1 einen Höhenversatz zwischen den beiden Kufen 13 in Richtung der Längsachsen der geraden Schenkel 3b des Steuerbügels 3. Zusätzlich ermöglichen die Kufengelenke 2 ein Verschwenken der Kufen 13 derart, daß durch die Neigung der Drehachsen ein Ausschwenken einer Kufe 13 aus der parallelen Kufenstellung, d.h. der Neutralstellung des Kufengelenks 2, stets mit einer gleichzeitigen Verkantung der Kufe verknüpft ist. Durch die Neigung der Schwenkachse derart, daß sie in Fahrtrichtung abfällt, wird gewährleistet, daß bei einem Verschwenken der Kufenenden nach außen die Kufen so verkanten, daß sie auf den Innenkanten aufliegen, d.h., daß sich eine Pflug-Stellung für die Kufen ergibt.

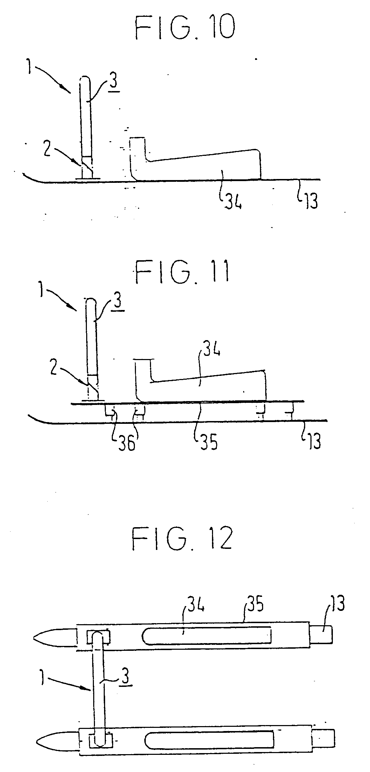

Bei der Ausführung gemäß den Fig. 9 und 10 sind die Kufengelenke 2 und die Formschalen 34 direkt auf die skiartigen Kufen 13 montiert. Bei einer weiteren Ausführung gemäß Fig. 11 sind die Kufengelenke 2 und die Formschalen 34 auf Platten 35 montiert, die jeweils parallel zu den Kufen 13 angeordnet sind und ihrerseits über Stoßdämpfer 36 mit den Kufen 13 verbunden sind. Statt der Stoßdämpfer 36 können auch starre Stützstreben vorgesehen sein. Durch die Anordnung dieser Platten 35 im Abstand zu den Kufen 13 ergibt sich eine bessere Bodenfreiheit, insbesondere für die Formschalen 34, und die Möglichkeit einer zusätzlichen Dämpfung zwischen den Kufen und dem Fahrer. Aus Fig. 12 ist die längliche Erstreckung der Platten 35 ersichtlich.

Mit Bezug auf die Figuren 13a bis 13d sollen nun die verschiedenen Fahrstellungen des Sportgeräts in seiner ersten Ausführungsform näher erläutert werden. Dabei ist zu beachten, daß die gezeigten Fahrstellungen zusätzlich mit einer Verschiebebewegung des Ausgleichselements relativ zum Steuerbügel 3 überlagert werden können, wie sie exemplarisch in Fig. 3 dargestellt ist. Dadurch können praktisch sämtliche Fahrweisen und Fahrstellungen, wie sie beim herkömmlichen Skifahren bekannt sind, auch mit diesem Sportgerät realisiert werden.

Fig. 13a zeigt eine Ausgangsfahrstellung mit parallelen Kufen 13, die nicht verschwenkt sind. Beide Kufen 13 liegen mit ihren Kufenaufstandsflächen 19 voll auf der Aufstandebene 18 auf. Neben den Kufengelenken 2 befindet sich auch die Verbindungseinrichtung 1 in ihrer Neutralstellung, d.h. beide Gleitstücke 4 haben genau die gleiche Auslenkung relativ zum Steuerbügel 3. Die gezeigte Fahrstellung dient dem Geradeausfahren, wenn kein Einkanten der Kufen in den Untergrund erforderlich ist.

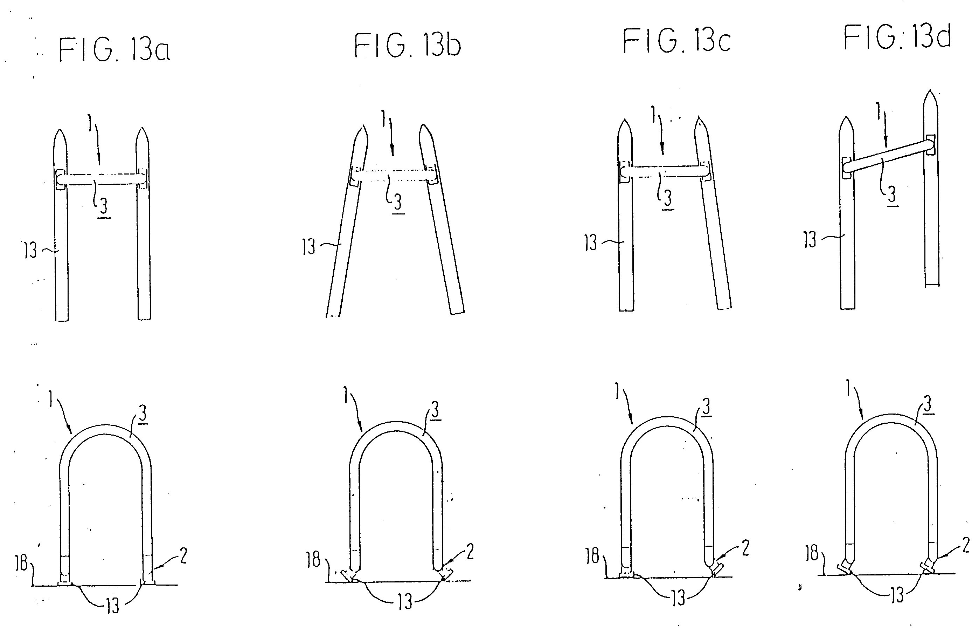

Bei der Fahrstellung gemäß Fig. 13b handelt es sich um eine Pflug-Fahrstellung, bei der die hinteren Enden der Kufen 13 nach außen verschwenkt sind, wobei sich durch die Wirkung der geneigten Drehachsen der Kufengelenke 2 eine Verkantung der Kufen 13 einstellt, d.h. die Kufenaufstandsflächen liegen nicht mehr senkrecht zur Längsachse der geraden Schenkel des Steuerbügels 3. Dadurch ergibt sich ein Einkanten der Innenkanten der Kufen 13 in den Untergrund. Durch eine entsprechende konstruktive Begrenzung des maximalen Verschwenkbereichs der Kufe, z.B. mittels der als Kulissenführung ausgebildeten Anschläge 24, 25 gemäß den Fig. 6 und 8 im Kufengelenk, wird ein zu weites Ausstellen der Kufen und ein mögliches Übereinanderbringen der Kufenspitzen wermieden.

Bei der Fahrstellung gemäß Fig. 13c ist die rechte Kufe 13 mit ihrem hinteren Ende nach außen verschwenkt, so daß sich eine Stemmbogen-Fahrstellung ergibt. Es besteht also die Möglichkeit, lediglich eine Kufe zu verschwenken und die zweite Kufe in ihrer Ausgangsstellung zu belassen. Eine derartige Fahrstellung kann beispielsweise zur Einleitung einer Kurve - im Beipiel nach links - dienen.

Fig. 13d zeigt eine Fahrstellung, bei der die beiden Kufen 13 gegensinnig längsverschoben werden, wobei sich durch die Wirkung der Kufengelenke 2 ein gleichsinniges Verkanten der Kufen relativ zur Verbindungseinrichtung 1 ergibt. Im gezeigten Beispiel kanten jeweils die rechten Kufenkanten in den Untergrund ein.

Die Steuerung des Sportgeräts erfolgt mit den Beinen, die mittels der Formschalen 34 direkt auf die Kufen 13 wirken, und mit den Händen, die den Steuerbügel 3 bedienen. Zusätzlich erfolgt eine Steuerung durch Körpergewichtsverlagerung des Fahrers. Somit ergibt sich ein sehr dynamisches Fahrgefühl, da der gesamte Körper des Fahrers zur Steuerung eingesetzt wird und der Fahrer durch die spezielle Sitzposition in sehr direktem Kontakt mit der Fahrpiste steht, insbesondere bei der Ausführung gemäß Fig. 9.

Zur Unterstützung der Steuerung kann hinter den Formschalen 34 jeweils ein Bremselement angeordnet sein, das mit den Fußballen betätigt wird. Weiterhin können auch Skistopper an den Kufen vorgesehen sein, die beispielsweise mit den Knien des Fahrers zusammenwirken.

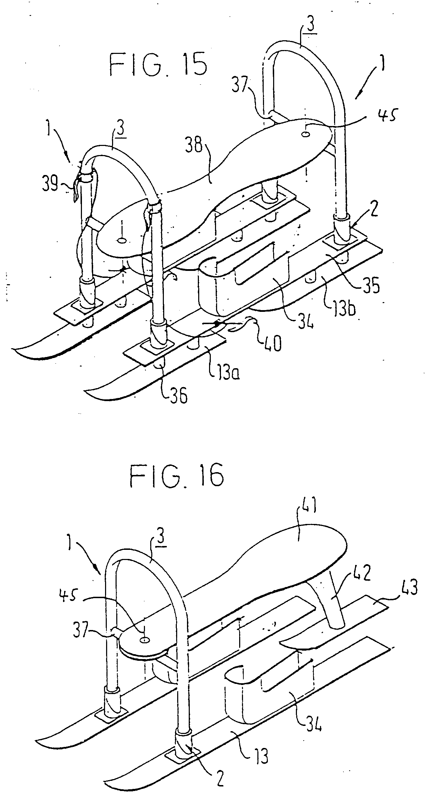

Fig. 14 zeigt eine zweite Ausführungsform des Sportgeräts, bei der zwei U-förmige Verbindungseinrichtungen 1 hintereinander im Abstand angeordnet sind, um zwei parallele Kufen 13 miteinander zu verbinden. Die im vorderen und hinteren Bereich der Kufen 13 angeordneten Verbindungseinrichtungen 1 weisen jeweils eine Querstrebe 37 auf, die die geraden Schenkel des Steuerbügels 3 miteinander verbinden. Ein Sitz 38, der anatomisch an die Sitzposition des Fahrers angepaßt ist, verbindet die beiden Querstreben 37 miteinander, wobei der Sitz 38 jeweils drehgelenkig an den Quersteben 37 angebracht ist. Somit bleiben die Steuerbügel 3 jeweils um eine Hochachse 45 relativ zum Sitz 38 drehbar, die parallel zu den geraden, parallelen Schenkeln des Steuerbügels 3 bzw. etwa senkrecht zur Aufstandsebene 18 verläuft. Die Verbindung zwischen Sitz und Querstrebe kann auch jeweils über ein Kugelgelenk erfolgen.

Analog zu Fig. 13d kann dann eine gegensinnige Längsverschiebung der Kufen 13 erfolgen, bei der sich die Steuerbügel 3 relativ zum Sitz 38 gleichsinnig verdrehen und bei der sich durch die Wirkung der Kufengelenke 2 eine gleichsinnige Verkantung der parallelen Kufen einstellt. Sowohl die in Fig. 14 gezeigte Ausgangsfahrstellung als auch die Fahrstellung in Analogie zur Fig. 13d kann dann zusätzlich mit einer Auslenkung der Ausgleichselemente in den Verbindungeinrichtungen 1 überlagert werden. Durch die Verknüpfung der Möglichkeit einer gleichsinnigen parallelen Kufenverkantung mit einer Verschiebemöglichkeit der Kufen in Richtung der Schenkellängsachsen der Steuerbügel ergibt sich eine sehr aktive Steuerungsmöglichkeit, bei der auch eine Körpergewichtsverlagerung vorteilhaft eingesetzt werden kann.

Fig. 15 zeigt eine Abwandlung des Sportgeräts gemäß Fig. 14, wobei in Analogie zu der Ausführung gemäß Fig. 11 Platten 35 vorgesehen sind, auf die die Kufengelenke 2 der beiden Verbindungseinrichtungen 1 sowie zwei Formschalen 34 montiert sind. Im Gegensatz zur Ausführung gemäß Fig. 14 sind die Kufen 13 jeweils in eine Vorderkufe 13a und eine Hinterkufe 13b unterteilt, die hintereinander unterhalb der Platten 35 angeordnet sind. Durch die Teilung der Kufen wird ein besserer Ausgleich von Geländeunebenheiten erzielt. Die beabstandete Anbringung der Kufen 13a, 13b in bezug auf die Platten 35 erfolgt über Stoßdämpfer 36 oder über starre Stützstreben. Ferner ist bei der Ausführung gemäß Fig. 15 beispielhaft eine Bremseinrichtung angeordnet, die über Handbremsgriffe 39 bedient wird und bei der Bremshebel 40, die zwischen den Vorderkufen und Hinterkufen angebracht sind, aktiviert werden.

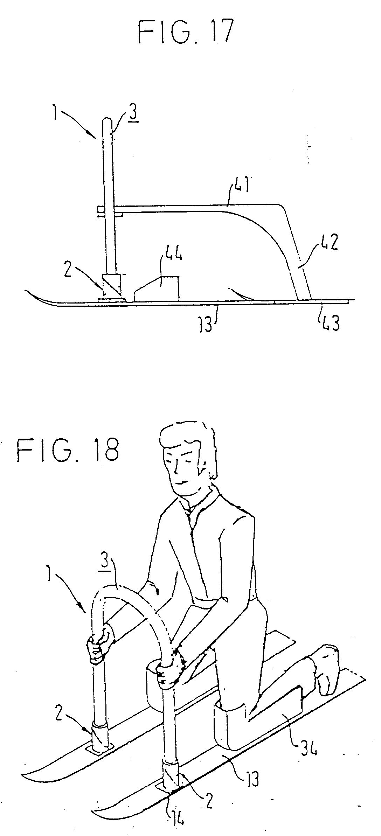

Die Ausführungen gemäß Fig. 14 und 15 sind jeweils mit Formschalen 34 versehen, so daß der Fahrer eine kniende Fahrposition einnimmt und der Sitz 38 einer zusätzlichen Abstützung des Fahrers in dieser Fahrposition dient. In weiteren Ausführungen können jedoch statt der Formschalen 34 jeweils Fuß-Halteeinrichtungen vorgesehen sein, wie sie weiter unten im Zusammenhang mit Fig. 17 noch näher erläutert werden. In Zusammenwirkung mit derartigen Fuß-Halteeinrichtungen sitzt der Fahrer auf dem Sitz 38 und stellt seine Füße in die Fuß-Halteeinrichtungen. Die Formschalen 34 und die Fuß-Halteeinrichtungen sind so montiert, daß sie im Bedarfsfall schell gegeneinander ausgetauscht werden können.

Eine dritte Ausführungsform des Sportgeräts ist in Fig. 16 gezeigt. Zwei Kufen 13 sind identisch wie bei der ersten Ausführungsform des Sportgeräts gemäß Fig. 9 über eine einzige U-förmige Verbindungseinrichtung 1 verbunden. Im Gegensatz zur ersten Ausführungsform ist bei der dritten Ausführungsform zusätzlich eine Querstrebe 37 zwischen den beiden geraden Schenkeln des Steuerbügels 3 vorgesehen, an der drehgelenkig ein Sitz 41 mit einem Stützholm 42, der sich auf eine Hilfskufe 43 abstützt, angebracht ist. Der Sitz 41 ist relativ zur Querstrebe 37 um eine Hochachse 45 drehbar, die parallel zu den Längsachsen der geraden, parallelen Schenkel des Steuerbügels bzw. etwa senkrecht zur Aufstandsebene 3 verläuft. Der Sitz 41 erstreckt sich von der Querstrebe 37 entgegen der Fahrtrichtung im Bereich zwischen den beiden Kufen 13 und endet in dem Stützholm 42, der starr mit der Hilfskufe 43 verbunden ist, die parallel zu den in ihrer Neutralstellung befindlichen Kufen 13 ausgerichtet ist. Der Sitz 41 und der Stützholm 42 sind einstückig als Formteil gefertigt, z.B. aus einem stabilen Kunststoff. Die Verbindung zwischen Sitz 41 und Querstrebe 37 kann auch über ein Kugelgelenk erfolgen. In der Ausführung gemäß Fig. 16 nimmt der Fahrer die gleiche Position wie beim Sportgerät gemäß Fig. 9 ein, jedoch wird er zusätzlich durch den Sitz 41 abgestützt.

In einer Abwandlung der Ausführung gemäß Fig. 16, die in Fig. 17 dargestellt ist, sind anstelle von Formschalen 34, wie sie auch bei der ersten Ausführungsform gemäß Fig. 9 vorgesehen sind, als Halteeinrichtungen 44 Fußschalen montiert. Diese Fußschalen umfassen den Fuß des Fahrers, damit dieser seine Steuerbewegungen auf die Kufen 13 übertragen kann. Anstelle von Fußschalen, die z.B. aus Kunststoff geformt sind, können auch Halteriemen oder -schlaufen zur Fixierung des Fußes auf der Kufe 13 vorgesehen sein. Bei der Ausführung gemäß Fig. 17 sitzt der Fahrer auf dem anatomisch angepaßten Sitz 41, so daß er im Vergleich zur ersten Ausführungsform des Sportgeräts eine komfortablere, aber weniger sportliche Sitzposition einnimmt.

Mit der dritten Ausführungsform gemäß den Fig. 16 und 17 lassen sich sämtliche Fahrstellungen realisieren, die im Zusammenhang mit der ersten Ausführungsform des Sportgeräts beschrieben worden sind.

## Patentansprüche

1. Sportgerät mit mindestens zwei Kufen (13), die über mindestens eine Verbindungseinrichtung (1) miteinander verbunden und über jeweils zwischen Kufe (13) und Verbindungseinrichtung (1) vorgesehene Kufengelenke (2) verschwenkbar sind, deren Schwenkachsen (50) gegenüber der Aufstandsebene (18) der Kufen (13) geneigt sind, wobei unter der Aufstandsebene (18) eine ideale Bezugsebene verstanden wird, auf der das Sportgerät mit seinen Kufen (13) bzw. deren Kanten bei nicht ausgelenkter Neutralstellung der Kufengelenke (2) aufliegt, wobei die Drehachsen (50) der Kufengelenke (2) jeweils in einer in wesentlichen senkrecht zur Aufstandsebene (18) der Kufen und in wesentlichen parallel zur Längsrichtung der Sportgeräts verlaufenden Ebene liegen. dadurch **gekennzeichnet**,
- daß die Neigung (α) der Schwenkachsen (50) der Kufengelenke (2) derart ist, daß die Schwenkachsen (50) in Fahrtrichtung des Sportgeräts abfallen und
- daß die Verbindungseinrichtung (1) einen rohrförmigen Steuerbügel (3) und ein durch diesen durchschiebbares, die Kufengelenke (2) verbindendes Ausgleichselement (4, 5; 4, 6) aufweist, derart, daß eine Verkürzung eines auf einer Seite aus dem Steuerbügel (3) herausragenden Abschnitts (4) des Ausgleichselements eine Verlängerung des auf der anderen Seite des Steuerbügels (3) herausragenden Abschnitts (4) des Ausgleichselements ergibt und umgekehrt.

2. Sportgerät nach Anspruch 1, dadurch **gekennzeichnet**, daß die Schwenkachsen (50) der Kufengelenke (2) jeweils in der senkrecht zur Aufstandsebene (18) der Kufen (13) und parallel zur Längsrichtung des Sportgerätes verlaufenden Ebene liegen.

3. Sportgerät nach Anspruch 1 oder 2, dadurch **gekennzeichnet**, daß der Winkel (α) zwischen der Schwenkachse (50) des Kufengelenks (2) und der Aufstandsebene (18) der Kufen (13) im Bereich von 20° bis 70° liegt.

4. Sportgerät nach Anspruch 1 oder 2, dadurch **gekennzeichnet**, daß der Winkel (α) zwischen der Schwenkachse (50) des Kufengelenks (2) und der Aufstandsebene (18) der Hufen (13) im Bereich von 30° bis 60° liegt.

5. Sportgerät nach Anspruch 1 oder 2, dadurch **gekennzeichnet**, daß der Winkel (α) zwischen der Schwenkachse (50) des Kufengelenks (2) und der Aufstandsebene (18) der Hufen (13) 45° beträgt.

6. Sportgerät nach einem der Ansprüche 1 bis 5, dadurch **gekennzeichnet**, daß der Steuerbügel (3) U-förmig mit zwei parallelen geraden Schenkeln (3b) und einem bogenförmigen Abschnitt (3a) zwischen den beiden Schenkeln (3b) ausgebildet ist.

7. Sportgerät nach einem der Ansprüche 1 bis 5, dadurch **gekennzeichnet**, daß der Steuerbügel (3) V-förmig mit zwei geraden Schenkeln (3b) und einem bogenförmigen Abschnitt (3a) zwischen den beiden Schenkeln (3b) ausgebildet ist.

8. Sportgerät nach einem der Ansprüche 1 bis 7, dadurch **gekennzeichnet**, daß das durchschiebbare Ausgleichselement (4, 6) zwei gerade Gleitstücke (4) umfaßt, die über ein biegsames Verbindungsstück (6) miteinander verbunden sind.

9. Sportgerät nach einem der Ansprüche 1 bis 7, dadurch **gekennzeichnet**, daß das durchschiebbare Ausgleichselement (4, 5) zwei gerade Gleitstücke (4) umfaßt, die über ein Dämpfungs- und/oder Federelement miteinander verbunden sind.

10. Sportgerät nach Anspruch 9, dadurch **gekennzeichnet**, daß das Federelement eine Zug- oder Druckfeder (5) ist.

11. Sportgerät nach einem der Ansprüche 1 bis 10, dadurch **gekennzeichnet**, daß die Kufengelenke (2) jeweils aus zwei auf planen Auflageflächen (17a, 17b) aufeinanderliegenden Gelenkhälften (9, 10) bestehen, die gegeneinander um die senkrecht zu den Auflageflächen (17a, 17b) liegende Schwenkachse (50) verdrehbar sind.

12. Sportgerät nach Anspruch 11, dadurch **gekennzeichnet**, daß die im unbelasteten Zustand des Hufengelenks (2) wirksame Auflagekraft zwischen den aufeinanderliegenden Auflageflächen (17a, 17b) einstellbar ist.

13. Sportgerät nach einen der Ansprüche 1 bis 12, dadurch **gekennzeichnet**, daß zum Festlegen der Neutralstellung der Kufengelenke (2) für Geradeausfahrt jeweils am Kufengelenk (2) eine Rasteinrichtung (27a, 27b, 29, 32, 33) vorgesehen ist.

14. Sportgerät nach einem der Ansprüche 1 bis 13, dadurch **gekennzeichnet**, daß am Kufengelenk (2) Anschläge (24, 25) zur Begrenzung der maximalen Verschwenkung der Kufe (13) vorgesehen sind.

15. Sportgerät nach einem der Ansprüche 11 bis 14, dadurch **gekennzeichnet**, daß zum Befestigen der Kufen (13) an der unteren Gelenkhälfte (10) der Kufengelenke (2) eine Befestigungsplatte (14) vorgesehen ist.

16. Sportgerät nach Anspruch 15, dadurch **gekennzeichnet**, daß die Befestigungsplatte (14) verdreht und/oder gekippt in bezug auf die Neutralstellung der Kufengelenke (2) an den unteren Gelenkhälften (10) angebracht ist, um eine Pfeilung und/oder eine Vorverkantung der Kufen (13) in der Neutralstellung zu erzielen.

17. Sportgerät nach einem der Ansprüche 1 bis 16, dadurch **gekennzeichnet**, daß die Kufen (13) skiartig ausgebildet sind.

18. Sportgerät nach einem der Ansprüche 1 bis 17, dadurch **gekennzeichnet**, daß auf den zwei Kufen (13) jeweils eine anatomisch angepaßte Formschale (34) zur Einfassung des Knie- , Unterschenkel- und Fußbereichs jeweils eines Beins des Sportgerätfahrers vorgesehen ist.

19. Sportgerät nach Anspruch 18, dadurch **gekennzeichnet**, daß die Formschalen (34) sowie die Kufengelenke (2) direkt an den Kufen (13) angeordnet sind.

20. Sportgerät nach Anspruch 18, dadurch **gekennzeichnet**, daß jeweils parallel und im Abstand zur Kufe (13) eine mit dieser, insbesondere über Stoßdämpfer (36), verbundene Platte (35) zur Anbringung der Formschalen (34) und der Kufengelenke (2) vorgesehen ist.

21. Sportgerät nach Anspruch 20, dadurch **gekennzeichnet**, daß an jeder Platte (35) zwei einzelne, hintereinander angeordnete Kufen (13a, 13b) vorgesehen sind.

22. Sportgerät nach einem der Ansprüche 1 bis 21, dadurch **gekennzeichnet**, daß zwei Verbindungseinrichtungen (1) vorgesehen sind und daß zwischen den im Abstand angeordneten Verbindungseinrichtungen (1) ein Sitz (38) angeordnet ist, der in seinen Endbereichen jeweils drehgelenkig mit einer an den Steuerbügeln (3) der Verbindungseinrichtungen (1) angeordneten Querstrebe (37) verbunden ist und zwar derart, daß jeder Steuerbügel (3) relativ zum Sitz (38) um eine etwa senkrecht zur Aufstandsebene (18) verlaufende Hochachse (45) des Sportgeräts drehbar ist.

23. Sportgerät nach einem der Ansprüche 1 bis 21, dadurch **gekennzeichnet**, daß bei Anordnung nur einer einzigen Verbindungeinrichtung (1) ein an einer Querstebe (37) des Steuerbügels (3) der Verbindungseinrichtung (1) um eine etwa senkrecht zur Aufstandsebene (18) verlaufende Hochachse (45) des Sportgeräts drehbar angeschlossener Sitz (41, 42) vorgesehen ist, der sich von der Verbindungseinrichtung (1) entgegen der Fahrtrichtung im Bereich zwischen den Kufen (13) erstreckt und über einen Stützholm (42) auf einer Hilfskufe (43) zwischen den Kufen (13) abgestützt ist.

24. Sportgerät nach Anspuch 22 oder 23, dadurch **gekennzeichnet**, daß an den Kufen (13) jeweils eine anatomisch angepaßte Halteeinrichtung (44) für die Füße des Sportgerätfahrers vorgesehen ist.

25. Sportgerät nach einem der Ansprüche 23 oder 24, dadurch **gekennzeichnet**, daß der Sitz (41) und der Stützholm (42) als einstückiges, an die Sitzposition des Fahrers angepaßtes Formteil gestaltet sind.

## Claims

1. Sport apparatus with at least two runners (13) which are linked by one linking element (1) and which can be swung round over two runner joints (2) respectively provided between the runner and the linking element. The axis of rotation (50) of the runner joints (2) are inclined in relation to the standing plane (18) of the runners (13), in which case the standing plane (18) is meant as an ideal reference plane on which the sport apparatus is standing with its runners (13) or their edges in a not steered out neutral position of the runner joints (2). The axis of rotation (50) are respectively situated in a plane that is mainly perpendicular to the standing plane (18) of the runners (13) and mainly parallel to the longitudinal direction of the sport apparatus.
This sport apparatus is characterised
- by the fact that the inclination (α) of the axis of rotation (50) is oriented in such manner that the axis of rotation (50) drop away in the forwards direction of the sport apparatus, and
- by the fact that the linking element (1) consists of tube-made handlebars (3) and an equalising element (4, 5; 4, 6) that is pushed through the handlebars (3) and links the runner joints (2) in such manner that a shortening of one segment (4) of the equalising element, that is outstanding on one side of the handlebars (3), leads to an extension of the segment (4) of the equalising element, that is outstanding on the other side of the handlebars (3), and vice-versa.

2. Sport apparatus according to claim 1 and characterised by the fact that the axis of rotation (50) of the runner joints (2) are situated in a plane that is respectively perpendicular to the standing plane (18) of the runners (13) and parallel to the longitudinal direction of the sport apparatus.

3. Sport apparatus according to claim 1 or 2 and characterised by the fact that the angle (α) between the axis of rotation (50) of the runner joint (2) and the standing plane (18) of the runners (13) is situated in the fork between 20° and 70°.

4. Sport apparatus according to claim 1 or 2 and characterised by the fact that the angle (α) between the axis of rotation (50) of the runner joint (2) and the standing plane (18) of the runners (13) is situated in the fork between 30° and 60°.

5. Sport apparatus according to claim 1 or 2 and characterised by the fact that the angle (α) between the axis of rotation (50) of the runner joint (2) and the standing plane (18) of the runners (13) measures exactly 45°.

6. Sport apparatus according to one of the claims 1 to 5 and characterised by the fact that the handlebars (3) have the shape of a U and consist of two parallel straight legs (3b) and one arched segment (3a) between the two legs (3b).

7. Sport apparatus according to one of the claims 1 to 5 and characterised by the fact that the handlebars (3) have the shape of a V and consist of two straight legs (3b) and one arched segment (3a) between the two legs (3b).

8. Sport apparatus according to one of the claims 1 to 7 and characterised by the fact that the equalising element (4, 6) that is pushed through the handlebars (3) consists of two straight gliding parts (4) which are linked together by one flexible linking part (6).

9. Sport apparatus according to one of he claims 1 to 7 and characterised by the fact that the equalising element (4, 5) that is pushed through the handlebars (3) consists of two straight gliding parts (4) which are linked by an absorption element and/or a spring element.

10. Sport apparatus according to claim 9 and characterised by the fact that the spring element is a traction or a pressure spring (5).

11. Sport apparatus according to one of the claims 1 to 10 and characterised by the fact that the runner joints (2) consist of respectively two joint halves (9, 10) lying on top of each other on two flat supporting surfaces (17a, 17b). The joint halves can turn in relation to each other around the axis of rotation (50) that is perpendicular to the supporting surfaces (17a, 17b).

12. Sport apparatus according to claim 11 and characterised by the fact that the weight force that is present, when no charge is being supported by the runner joints (2), between the supporting surfaces (17a, 17b) lying on top of each other can be adjusted.

13. Sport apparatus according to one of the claims 1 to 12 and characterised by the fact that a notch (27a, 27b, 29, 32, 33) is provided respectively on the runner joints (2) for the fixing of the neutral position of the runner joints (2) for the straight ahead drive.

14. Sport apparatus according to one of the claims 1 to 13 and characterised by the fact that stops (24, 25) are provided on the runner joints (2) to limit the maximal inclination of the runners (13).

15. Sport apparatus according to one of the claims 1 to 14 and characterised by the fact that a fastening sheet (14) is provided on the lower runner joint half (10) to fix the runners (13).

16. Sport apparatus according to claim 15 and characterised by the fact that the fastening sheet (14) is attached on the lower joint half (10) so as to be turned round and/or canted in relation to the neutral position of the runner joints (2) in order to obtain an arrow-like and/or a previously edged position of the runners (13) in the neutral position.

17. Sport apparatus according to one of the claims 1 to 16 and characterised by ski-like runners (13).

18. Sport apparatus according to one of the claims 1 to 17 and characterised by two shell moulds (14) respectively on the two runners (13), that are anatomically adapted for containing the region of knee, calf and foot respectively of one leg of the driver of the sport apparatus.

19. Sport apparatus according to claim 18 and characterised by the fact that the shell moulds (34) as well as the runner joints (2) are fixed directly on the runners (13).

20. Sport apparatus according to claim 18 and characterised by a plate (35) for the fixing of the shell mould (34) and the runner joint (2), that is parallel to and distanced from the runner (13) and linked with it in particular by shock absorbers (36).

21. Sport apparatus according to claim 20 and characterised by two separate runners (13a, 13b) that are fixed one behind the other under each plate (35).

22. Sport apparatus according to one of the claims 1 to 21 and characterised by two linking elements (1) and by a seat (38) planned in the spacing between the two linking elements (1), which is linked on its endings by swivel-joints respectively with a cross beam (37) fixed on the handlebars (3) of the linking element (1), and this in a manner that both handlebars (3) can theoretically turn in relation to the seat (38) around an axis that is approximately perpendicular to the standing plane (18).

23. Sport apparatus according to one of the claims 1 to 21 and characterised by the fact that a seat (41, 42) - that can pivote around an axis (45) that is approximately perpendicular to the standing plane (18) - is fixed on a cross beam (37) of the handlebars (3) of only one provided linking element (1) and stretches from the linking element (1) against the direction of the sport apparatus in the area between the runners (13) and is supported by a beam (42) that is put up on a helping runner (43) between the runners (13).

24. Sport apparatus according to claims 22 or 23 and characterised by two holding attachments (44) respectively on the two runners, which are anatomically adapted for the feet of the driver of the sport apparatus.

25. Sport apparatus according to claims 23 or 24 and characterised by the fact that the seat (41) and the supporting beam (42) are made of one piece that is adapted to the seating position of the driver.

## Revendications

1. Appareil de sport muni d'au moins deux patins (13) reliés entre eux par au moins un dispositif de liaison (1) et inclinables par des articulations (2) prévues respectivement entre le patin (13) et le dispositif de liaison (1). Les axes de rotation (50) des articulations des patins (2) sont inclinés par rapport au plan de la surface de contact au sol (18) des patins, auquel cas on entend par plan de la surface de contact au sol un plan de référence idéal sur lequel l'appareil de sport repose avec ses patins (13) ou avec leurs arêtes dans la position neutre non manoeuvrée des articulations des patins (2). Dans ce cas, les axes de rotation (50) des articulations des patins (2) se trouvent respectivement dans un plan essentiellement perpendiculaire au plan de la surface de contact au sol (18) des patins et essentiellement parallèle au sens de la longueur de l'appareil de sport.
Il est caractérisé
- par une inclinaison (α) des axes de rotation (50) des articulations des patins (2), qui est telle que les axes de rotation descendent dans le sens de marche de l'appareil de sport, et
- par le fait que le dispositif de liaison (1) présente un guidon (3) formé d'un tube recourbé en étrier et un élément compensateur (4, 5; 4, 6) que l'on peut passer à travers le tube du guidon et qui relie les articulations des patins (2), de telle façon qu'un raccourcissement d'un segment (4) de l'élément compensateur dépassant d'un côté du guidon (3) entraîne un rallongement du segment (4) de l'élément compensateur dépassant de l'autre côté du guidon (3), et inversement.

2. Appareil de sport d'après spécification 1, caractérisé par le fait que les axes de rotation (50) des articulations des patins (2) s'inscrivent dans un plan respectivement perpendiculaire au plan de la surface de contact au sol (18) des patins (13) et parallèle au sens de la longueur de l'appareil de sport.

3. Appareil de sport d'après spécification 1 ou 2, caractérisé par un angle (α) entre l'axe de rotation (50) de l'articulation du patin (2) et le plan de la surface de contact au sol (18) des patins (13) compris entre 20° et 70°.

4. Appareil de sport d'après spécification 1 ou 2, caractérisé par un angle (α) entre l'axe de rotation (50) de l'articulation du patin (2) et le plan de la surface de contact au sol (18) des patins (13) compris entre 30° et 60°.

5. Appareil de sport d'après spécification 1 ou 2, caractérisé par un angle (α) de 45° entre l'axe de rotation (50) de l'articulation du patin (2) et le plan de la surface de contact au sol (18) des patins (13).

6. Appareil de sport d'après l'une des spécifications 1 à 5, caractérisé par un guidon (3) en forme de U avec deux branches (3b) droites parallèles et une partie arquée (3a) entre les deux branches (3b).

7. Appareil de sport d'après l'une des spécifications 1 à 5, caractérisé par un guidon (3) en forme de V avec deux branches (3b) droites et une partie arquée (3a) entre les deux branches (3b).

8. Appareil de sport d'après l'une des spécifications 1 à 7, caractérisé par le fait que l'élément compensateur (4, 6) passable à travers le guidon comprend deux pièces coulissantes droites (4) reliées entre elles par une pièce de raccordement flexible (6).

9. Appareil de sport d'après l'une des spécifications 1 à 7, caractérisé par le fait que l'élément compensateur (4, 5) passable à travers le tube du guidon est composé de deux pièces coulissantes droites (4) reliées entre elles par un élément d'amortissement et/ou de suspension.

10. Appareil de sport d'après spécification 9, caractérisé par le fait que l'élément de suspension est un ressort de traction ou de pression (5).

11. Appareil de sport d'après l'une des spécifications 1 à 10, caractérisé par des articulations des patins (2) respectivement composées de deux moitiés d'articulations (9, 10) posées l'une sur l'autre sur deux surfaces de contact planes (17a, 17b), les moitiés d'articulations pouvant tourner l'une par rapport à l'autre autour de l'axe de rotation (50) perpendiculaire à leurs surfaces de contact (17a, 17b).

12. Appareil de sport d'après spécification 11, caractérisé par le fait que la force d'appui s'appliquant entre les deux surfaces de contact (17a, 17b) posées l'une sur l'autre, lorsque l'articulation du patin (2) ne supporte aucune charge, est réglable.

13. Appareil de sport d'après l'une des spécifications 1 à 12, caractérisé par un cran d'arrêt (27a, 27b, 29, 32, 33) respectivement dans chaque articulation de patin (2) pour fixer l'appareil dans la position neutre des articulations des patins (2) pour la marche en ligne droite.

14. Appareil de sport d'après l'une des spécifications 1 à 13, caractérisé par des butoirs (24,25) dans les articulations des patins (2) pour limiter l'inclinaison maximale des patins (13).

15. Appareil de sport d'après l'une des spécifications 11 à 14, caractérisé par une plaque (14) montée sur la moitié d'articulation inférieure (10) de l'articulation du patin (2) pour le montage des patins (13).

16. Appareil de sport d'après spécification 15, caractérisé par le fait que la plaque (14) montée sur la moitié d'articulation inférieure (10) est tournée et/ou inclinée par rapport à la position neutre des articulations des patins (2) afin d'obtenir une position en flèche et/ou une inclinaison initiale des patins (13) dans la position neutre.

17. Appareil de sport d'après l'une des spécifications 1 à 16, caractérisée par des patins (13) similaires à des skis.

18. Appareil de sport d'après l'une des spécifications 1 à 17, caractérisé par des coques (34) anatomiques montées respectivement sur les deux patins (13) pour recevoir genou, mollet et pied respectivement d'une jambe du conducteur de l'appareil.

19. Appareil de sport d'après spécification 18, caractérisé par le fait que les coques (34) ainsi que les articulations des patins (2) sont fixées directement sur les patins (13).

20. Appareil de sport d'après spécification 18, caractérisé par une plaque (35) parallèle au patin (13), reliée avec celui-ci - en particulier par des absorbeurs de chocs (36) - et ayant pour fonction le support de la coque (34) et de l'articulation du patin (2).

21. Appareil de sport d'après spécification 20, caractérisé par deux patins séparés (13a, 13b) alignés l'un derrière l'autre et fixés sur chaque plaque (35).

22. Appareil de sport d'après l'une des spécifications 1 à 21, caractérisé par deux dispositifs de liaison (1) et par un siège (38) monté entre les deux dispositifs (1) écartés l'un de l'autre, lequel est relié en ses extrémités par des articulations pivotantes respectivement à une barre transversale (37) fixée sur le guidon en étrier (3) d'un dispositif de liaison (1), et cela de telle façon que chaque guidon (3) peut tourner, par rapport au siège (38), autour d'un axe (45) approximativement perpendiculaire au plan de la surface de contact au sol (18) de l'appareil de sport.

23. Appareil de sport d'après l'une des spécifications 1 à 21, caractérisé par un siège (41, 42) relié à la barre transversale (37) du guidon en étrier (3) d'un unique dispositif de liaison (1), tournable autour d'un axe approximativement perpendiculaire au plan de la surface de contact au sol (18), s'étendant à partir du dispositif de liaison contre le sens de marche dans le secteur entre les patins (13) et étant supporté par une barre (42) montée sur un patin auxiliaire (43) entre les patins (13).

24. Appareil de sport d'après l'une des spécifications 22 ou 23, caractérisé par un dispositif de maintien (44) anatomiquement adapté pour les pieds du conducteur de l'appareil de sport, monté sur chaque patin (13).

25. Appareil de sport d'après l'une des spécifications 23 ou 24, caractérisé par un siège (41) et une barre de support (42) formés d'une seule pièce adaptée au niveau de sa forme à la position assise du conducteur.
